# NEUE EUROPÄISCHE PATENTSCHRIFT

(11) **EP 0 410 301 B2**
(45) Veröffentlichungstag und Bekanntmachung des Hinweises auf die Entscheidung über den Einspruch: **18.06.2003**
(45) Hinweis auf die Patenterteilung: 05.10.1994
(21) Anmeldenummer: 90113834.7
(22) Anmeldetag: 19.07.1990
(51) Int. Cl.: C08L 77/00, C08K 7/00, C08K 3/22, C08K 3/38

(54) **Flammgeschützte thermoplastische Formmassen**
Flame resistant thermoplastic mouldings
Masses à mouler thermoplastiques ignifugées

(30) Priorität: 27.07.1989 DE 3924869
(43) Veröffentlichungstag der Anmeldung: 30.01.1991
(73) Patentinhaber: BASF Aktiengesellschaft, 67063 Ludwigshafen (DE)
(72) Erfinder: Baierweck, Petra, Dr., D-6707 Schifferstadt (DE); Blinne, Gerd, Dr., D-6719 Bobenheim (DE); Koetting, Manfred, D-6704 Mutterstadt (DE)

(56) Entgegenhaltungen:
- EP-A- 320 725
- EP-A- 333 457
- EP-A- 0 288 269
- Patent Abstracts of Japan, vol. 12, no. 598 (C-538)(3245) 21 Oktober 88, & JP-A-63 139942

## Beschreibung

Die Erfindung betrifft gemäß Patentansprüche für die Vertragsstaaten FR, IT, NL, CH, BE, ES, LI flammgeschützte thermoplastische Formmassen, bestehend aus
A) 35 - 97 Gew.-% eines teilaromatischen Copolyamids mit einem Triamingehalt von weniger als 0,5 Gew.-%, aufgebaut im wesentlichen aus
   a₁) 40 - 90 Gew.-% Einheiten, die sich von Terephthalsäure und Hexamethylendiamin ableiten,
   a₂) 0 - 50 Gew.-% Einheiten, die sich von ε-Caprolactam ableiten und
   a₃) 0 - 60 Gew.-% Einheiten, die sich von Adipinsäure und Hexamethylendiamin ableiten,
   wobei die Komponente a₂) und/oder a₃) insgesamt mindestens 10 Gew.-% der Gesamteinheiten ausmachen,
B) 1 - 20 Gew.-% eines bromierten Polystyrols oder eines bromierten Styrol-Oligomeren oder deren Mischungen,
C) 1 - 10 Gew.-% eines synergistischen Metalloxides oder Metallborates oder deren Mischungen
   sowie darüber hinaus
D) 1 - 35 Gew.-% eines faser- oder teilchenförmigen Füllstoffes oder deren Mischungen
   und
E) 0 - 20 Gew.-% eines kautschukelastischen Polymerisates und gegebenenfalls bis zu 20 Gew.-%, bezogen auf das Gesamtgewicht der Komponenten A) bis E), üblicher Zusatzstoffe und Verarbeitungshilfsmittel sowie gemäß den Patentansprüchen für die Vertragsstaaten DE und GB flammgeschützte, thermoplastische Formmassen, bestehend aus

A) 35 bis 97 Gew.-% eines teilaromatischen Copolyamids mit einem Triamingehalt von weniger als 0,5 Gew.-% aufgebaut im wesentlichen aus
   a₁) 40 bis 90 Gew.-% Einheiten, die sich von Terephthalsäure und Hexamethylendiamin ableiten,
   a₂) 0 bis 50 Gew.-% Einheiten, die sich von ε-Caprolactam ableiten und
   a₃) 0 bis 60 Gew.-% Einheiten, die sich von Adipinsäure und Hexamethylendiamin ableiten,
   wobei die Komponente a₂) und/oder a₃) insgesamt mindestens 10 Gew.-% der Gesamteinheiten ausmachen,
B) 1 bis 20 Gew.-% eines bromierten Polystyrols oder eines bromierten Styrol-Oligomeren oder deren Mischungen,
C) 1 bis 10 Gew.-% eines synergistischen Metalloxides oder Metallborates oder deren Mischungen sowie darüber hinaus
D) 1 bis 35 Gew.-% eines faser- oder teilchenförmigen Füllstoffes oder deren Mischungen
   und
E) 0 bis 20 Gew.-% eines kautschukelastischen Polymerisates und gegebenenfalls bis zu 20 Gew.-%, bezogen auf das Gesamtgewicht der Komponenten A) bis E), üblicher Zusatzstoffe und Verarbeitungshilfsmittel, mit der Maßgabe, daß die Formmassen kein Anhydridgruppen aufweisendes bromiertes Polystyrol enthalten.

Weiterhin betrifft die Erfindung die Verwendung dieser Formmassen zur Herstellung von Folien, Fasern und Formkörpern sowie die Formkörper, die unter Verwendung dieser Formmassen als wesentliche Komponenten erhältlich sind.

Teilkristalline, teilaromatische Copolyamide zeichnen sich insbesondere durch ihre hohe Temperaturbeständigkeit aus, die für viele Anwendungsgebiete erforderlich ist. Aufgrund des hohen Schmelzpunktes ist die Flammschutzausrüstung dieser Polyamide problematisch, da die meisten konventionellen Flammschutzmittel wegen ihrer geringen Thermostabilität nicht zersetzungsfrei einarbeitbar sind.

Aus der EP-A 299 444 ist bekannt, Polyamid 66/6T und Polyamid 6/6T mit rotem Phosphor in Anwesenheit von Stabilisatoren zu Flammschutzzwecken auszurüsten.

Derartige Formmassen weisen den Nachteil auf, daß durch die rote Eigenfarbe des Phosphors und seines pigmentartigen Charakters diese nicht mehr hell eingefärbt werden können. Zusätzlich entstehen bei Einwirkung von Feuchtigkeit und Wärme Thermooxidationsprodukte des Phosphors, sowie Phosphin- oder Sauerstoffsäuren, die einerseits toxikologisch problematisch sind und andererseits leitfähige Beläge bilden. Durch die reduzierten Oberflächenwiderstände wird die Verwendbarkeit solcher Formteile im Elektrobereich erheblich eingeschränkt.

Aus der DE-A 27 03 419 sind Polyamidformmassen bekannt, die mit bromierten Styrol-Oligomeren und einem synergistischen Metalloxid flammfest ausgerüstet sind.

Aus der DE-A 15 70 395, DE-A 24 59 062 und DE-A 33 37 223 ist die Verwendung von hochmolekularen, kernbromierten Polystyrolen als Flammschutzmittel für Polyolefine, Epoxyharze, Styrolpolymerisate, ABS und Polyesterformmassen bekannt.

Thermoplastische Polyamide, vor allem solche mit hohem Schmelzpunkt, wie Polyamid 6/6T werden üblicherweise bei Temperaturen von über 300°C verarbeitet. Besonders bei füllstoffverstärkten Polyamiden müssen verhältnismäßig hohe Verarbeitungstemperaturen angewandt werden. Außerdem treten bei der Einarbeitung von Füllstoffen stärkere Scherkräfte auf, die weitere Temperaturerhöhungen, insbesondere lokale Temperaturspitzen z. B. am Glasfaserknetblock, zur Folge haben.

Die meisten der bekannten Flammschutzmittel auf Halogenbasis zersetzen sich jedoch bei diesen Temperaturen, wobei korrodierend wirkende Gase entstehen können und Verfärbungen der Formteile auftreten. Ein weiterer Nachteil ist, daß viele Halogenverbindungen, wie chlorierte oder bromierte aliphatische, cycloaliphatische oder aromatische niedermolekulare Verbindungen stark toxisch sind. Wegen der geringen Verträglichkeit der meisten niedermolekularen Halogenverbindungen mit Polyamiden und ihrem verhältnismäßig hohen Dampfdruck kann es zum Ausschwitzen der Flammschutzmittel und dabei zu Belagbildung kommen.

Entsprechend werden in der älteren europäischen Anmeldung (DE, GB) EP-A 333 457 Mischungen aus bromierten Polystyrolen und mit Anhydridgruppen gepfropften bromierten Polystyrolen vorgeschlagen.

Der vorliegenden Erfindung lag daher die Aufgabe zugrunde, flammfeste thermoplastische Formmassen zur Verfügung zu stellen, deren Formkörper gute elektrische Eigenschaften, insbesondere Kriechstromfestigkeit und Durchschlagsfestigkeit sowie ein gutes Gesamtspektrum der mechanischen Eigenschaften aufweisen. Darüber hinaus sollen diese Formkörper eine helle Eigenfarbe aufweisen und die Flammschutzeigenschaften sowie elektrischen Eigenschaften weitestgehend unabhängig von der Art und Menge der Füllstoffe sein.

Diese Aufgabe wird erfindungsgemäß durch die eingangs definierten thermoplastischen Formmassen gelöst.

Bevorzugte Massen dieser Art und ihre Verwendung sind den Unteransprüchen zu entnehmen.

Als Komponente A) enthalten die erfindungsgemäßen thermoplastischen Formmassen 35 bis 97 und insbesondere 40 bis 90 Gew.-% eines teilaromatischen Copolyamids mit einem Triamingehalt von weniger als 0,5 Gew.-% mit dem im folgenden beschriebenen Aufbau:

Die teilaromatischen Copolyamide A) enthalten als Komponente a₁) 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten (a₂) und/oder Einheiten, die sich von Adipinsäure und Hexamethylendiamin (a₃) ableiten.

Der Anteil an Einheiten die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Bevorzugt werden Copolyamide, dere Zusammensetzung im Dreistoffdiagramm innerhalb des durch Eckpunkte X₁ bis X₅ festgelegten Fünfecks liegt, wobei die Punkte X₁ bis X₅ folgendermaßen definiert sind:

| | |
|---|---|
| X₁ | 40 Gew.-% Einheiten a₁) |
| | 60 Gew.-% Einheiten a₃) |
| X₂ | 60 Gew.-% Einheiten a₁) |
| | 40 Gew.-% Einheiten a₃) |
| X₃ | 80 Gew.-% Einheiten a₁) |
| | 5 Gew.-% Einheiten aₐ) |
| | 15 Gew.-% Einheiten a₃) |
| X₄ | 80 Gew.-% Einheiten a₁) |
| | 20 Gew.-% Einheiten a₂) |
| X₅ | 50 Gew.-% Einheiten a₁) |
| | 50 Gew.-% Einheiten a₂) |

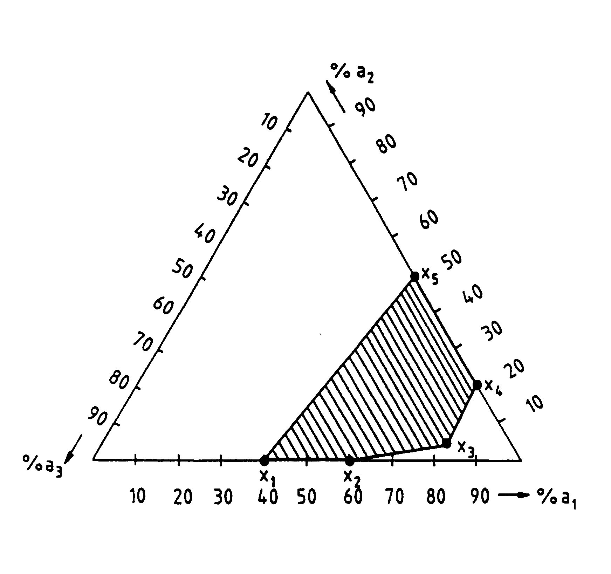

In der Abbildung ist das durch diese Punkte festgelegte Fünfeck in einem Dreistoffdiagramm dargestellt.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten a₁)) und 20 bis 50, vorzugsweise 25 bis 40 Gew.-% Einheiten, die sich von ε-Caprolactam ableiten (Einheiten a₂)), erwiesen.

Neben den vorstehend beschriebenen Einheiten a₁) bis a₃) können die erfindungsgemäßen teilaromatischen Copolyamide noch untergeordnete Mengen, vorzugsweise nicht mehr als 15 Gew.-%, insbesondere nicht mehr als 10 Gew.-% an weiteren Polyamidbausteinen enthalten, wie sie von anderen Polyamiden bekannt sind. Diese Bausteine können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien nur Suberinsäure, Azelainsäure, Sebacinsäure oder Isophthalsäure als Vertreter der Dicarbonsäuren, 1,4-Butandiamin, 1,5-Pentadiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, Omega-Aminoundecansäure und Laurinlactam als Vertreter von Lactamen bzw. Aminocarbonsäuren genannt.

Die Schmelzpunkte der teilaromatischen Copolyamide A) liegen im Bereich von 260°C bis über 300°C, wobei dieser hohe Schmelzpunkt auch mit einer hohen Glasübergangstemperatur von in der Regel mehr als 75°C, insbesondere mehr als 85°C verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und eine Glasübergangstemperatur von mehr als 110°C auf.

Binäre Copolyamide auf der Basis von Terephthalsäure, Adipinsäure und Hexamethylendiamin (HMD) erreichen bereits bei niedrigeren Gehalten von etwa 55 Gew.-% Einheiten aus Terephthalsäure und Hexamethylendiamin Schmelzpunkte von 300°C und mehr, wobei die Glasübergangstemperatur nicht ganz so hoch liegt wie bei binären Copolyamiden, die anstelle von Adipinsäure bzw. Adipinsäure/HMD ε-Caprolactam enthalten.

Die Herstellung der teilaromatischen Copolyamide A) kann z.B. nach dem in den EP-A 129 195 und EP-A 129 196 beschriebenen Verfahren erfolgen.

Gemäß diesem Verfahren wird eine wäßrige Lösung der Monomeren, d.h. in diesem Fall der Monomeren, die die Einheiten a₁) bis a₃) bilden, unter erhöhtem Druck unter gleichzeitiger Verdampfung von Wasser und Bildung eines Präpolymeren auf eine Temperatur von 250 bis 300°C erhitzt, anschließend werden Präpolymere und Dämpfe kontinuierlich getrennt, die Dämpfe rektifiziert und die mitgeführten Diamine zurückgeleitet. Schließlich wird das Präpolymer in eine Polykondensationszone geleitet und unter einem Überdruck von 1 bis 10 bar und einer Temperatur von 250 bis 300°C polykondensiert. Wesentlich ist bei dem Verfahren, daß die wäßrige Salzlösung unter einem Überdruck von 1 bis 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.-% beträgt.

Durch diese kurzen Verweilzeiten wird die Bildung von Triaminen weitgehend verhindert, so daß die teilaromatischen Copolyamide A) Triamingehalte von weniger als 0,5 Gew.-%, insbesondere weniger als 0,3 Gew.-% aufweisen. Hohe Triamingehalte können zu einer Verschlechterung der Produktqualität und zu Problemen bei der kontinuierlichen Herstellung der teilaromatischen Copolyamide führen. Als Triamin, welches solche Probleme verursachen kann, ist insbesondere das Dihexamethylentriamin zu nennen, welches sich aus dem als Monomer verwendeten Hexamethylendiamin bildet.

Die verwendeten wäßrigen Lösungen haben in der Regel einen Monomergehalt von 30 bis 70 Gew.-%, insbesondere 40 bis 65 Gew.-%.

Die wäßrige Salzlösung wird vorteilhaft mit einer Temperatur von 50 bis 100°C kontinuierlich in eine Verdampferzone geleitet, wo die wäßrige Salzlösung unter einen Überdruck von 1 bis 10, vorzugsweise von 2 bis 6 bar auf eine Temperatur von 250 bis 330°C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 bis 55 Sekunden und insbesondere 10 bis 40 Sekunden beträgt.

Der Umsatz beim Austritt aus der Verdampferzone beträgt vorteilhaft mindestens 93, vorzugsweise 95 bis 98 % und der Wassergehalt liegt vorzugsweise im Bereich von 2 bis 5, insbesondere 1 bis 3 Gew.-%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Dioaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 bis 1,7 hat, wird in eine Polymerisationszone geleitet. In der Polymerisationszone wird die anfallende Schmelze bei einer Temperatur von 250 bis 330°C, insbesondere 270 bis 310°C, und unter einem Überdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 bis 30 Minuten ein. Das so erhaltene Polyamid, das in der Regel eine relative Viskosität von 1,2 bis 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z. B. von 170 bis 240°C, bis zur gewünschten Viskosität kondensiert. Vorteilhaft verwendet an hierfür den am Kopf der Kolonne anfallenden Wasserdampf.

Die relative Viskosität, gemessen in 1 % Lösung (1 g/100 ml) in 96 gew.-%iger H₂SO₄ bei 25°C, liegt nach der Festphasennachkondensation im allgemeinen im Bereich von 2,2 bis 5,0, vorzugsweise von 2,3 bis 4,5.

Nach einer anderen bevorzugten Arbeitsweise wird die aus der Polykondensationszone ausgetragene Polyamidschmelze in eine weitere Polykondensationszone geleitet und dort unter fortlaufender Ausbildung neuer Oberflächen bei einer Temperatur von 285 bis 310°C vorteilhaft unter vermindertem Druck, z. B. von 1 bis 500 mbar, bis zur gewünschten Viskosität kondensiert. Geeignete Vorrichtungen sind als Finisher bekannt.

Ein weiteres Verfahren, welches dem vorstehend beschriebenen ähnelt, ist in der EP-A 129 196 beschrieben, worauf hier wegen weiterer Einzelheiten des Verfahrens verwiesen wird.

Als Komponente B) enthalten die erfindungsgemäßen Formmassen 1 - 20 Gew.-% eines bromierten Polystyrols oder eines bromierten Styrol-Oligomeren oder deren Mischungen.

Die als Flammschutzmittel eingesetzten bromierten Oligostyrole haben einen mittleren Polymerisationsgrad (Zahlenmittel) zwischen 3 und 90, vorzugsweise zwischen 5 und 60, gemessen dampfdruckosmometrisch in Toluol. Zyklische Oligomere sind ebenfalls geeignet. Gemäß einer bevorzugten Ausführungsform der Erfindung weisen die einzusetzenden bromierten oligomeren Styrole die nachstehende Formel I auf, in der R Wasserstoff oder ein aliphatischer Rest, insbesondere ein Alkylrest wie z. B. CH₃ oder C₂H₅ und n die Anzahl der sich wiederholenden Kettenbausteine bedeuten. R' kann sowohl H als auch Brom als auch ein Fragment eines üblichen Radikalbildners sein:

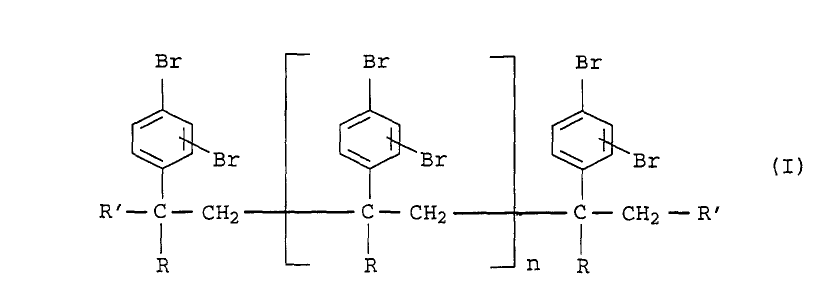

Der Wert für n kann 1 - 88, vorzugsweise 3 - 58, betragen. Die bromierten Oligostyrole enthalten 40 bis 80 Gew.-% vorzugsweise 55 bis 70 Gew.-% Brom. Bevorzugt ist ein Produkt, das überwiegend aus Polydibromstyrol besteht. Die Substanzen sind unzersetzt schmelzbar und z. B. in Tetrahydrofuran löslich. Sie können hergestellt werden entweder durch Kernbromierung von - gegebenenfalls aliphatisch hydrierten - Styrololigomeren, wie sie z. B. durch thermische Polymerisation von Styrol erhalten werden (nach DT-OS 25 37 385) oder durch radikalische Oligomerisierung von geeigneten bromierten Styrolen. Die Herstellung des Flammschutzmittels kann auch durch ionische Oligomerisation von Styrol und anschließende Bromierung erfolgen. Die zur Flammfestausrüstung der Polyamide notwendige Menge an bromiertem Oligostyrol hängt vom Bromgehalt ab. Der Bromgehalt in den erfindungsgemäßen Formmassen beträgt von 4 bis 20 Gew.-%, vorzugsweise von 5 bis 12 Gew.-%.

Die bromierten Polystyrole gemäß der Erfindung werden üblicherweise nach dem in der EP-A 47 549 beschriebenen Verfahren erhalten:

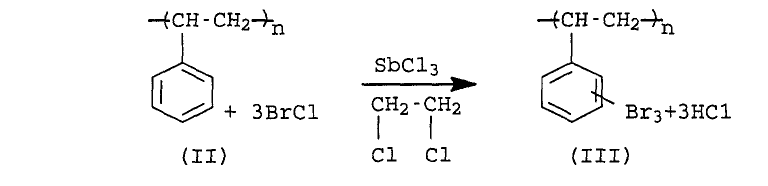

Die nach diesem Verfahren und im Handel erhältlichen bromierten Polystyrole sind vorwiegend kernsubstituierte tribromierte Produkte. n' (s. III) hat allgemein Werte von 125 bis 1 500, was einem Molekulargewicht von 42 500 bis 235 000 vorzugsweise von 130 000 bis 235 000 entspricht.

Der Bromgehalt (bezogen auf den Gehalt an kernsubstituiertem Brom) beträgt im allgemeinen mindestens 55, vorzugsweise mindestens 60 und insbesondere 65 Gew.-%.

Die im Handel erhältlichen pulverförmigen Produkte weisen im allgemeinen eine Glastemperatur von 160 bis 200°C auf.

Es können auch Mischungen der bromierten Oligostyrole mit bromierten Polystyrolen in den erfindungsgemäßen Formmassen eingesetzt werden, wobei das Mischungsverhältnis beliebig ist.

Die erfindungsgemäßen Formmassen enthalten als Komponente C) 1 - 10 und insbesondere 2 - 5 Gew.-% eines synergistischen Metalloxides oder Metallborates oder deren Mischungen. Als synergistische Metalloxide sind allgemein Zinkoxid, Bleioxid, Eisenoxid, Aluminiumoxid, Zinnoxid und Magnesiumoxid oder deren Mischungen geeignet. Bevorzugt sind Antimontrioxid und/oder Antimonpentoxid.

Geeignete Metallborate sind Borate von Metallen der 1. bis 3. Hauptgruppe sowie der 1. bis 8. Nebengruppe des Periodensystems, wobei wasserfreies Zinkborat oder Zinkborat der allgemeinen Formel (IV)

2Zn_{0,3}B₂O₃ x H₂O (IV)

in der X 3,3 bis 3,7 bedeutet, bevorzugt sind. Dieses Zinkborat ist im wesentlichen bei den hohen Verarbeitungstemperaturen der teilaromatischen Polyamide stabil und neigt nur unwesentlich zur Abspaltung des Hydratwassers. Dementsprechend sind Zinkborate mit höherem Hydratwasseranteil im allgemeinen nicht so gut als Synergist geeignet.

Es können auch Mischungen von Metallboraten mit Metalloxiden eingesetzt werden, wobei das Mischungsverhältnis beliebig ist.

Bevorzugt sind Mischungen von Antimontrioxid mit wasserfreiem Zinkborat.

Als Komponente D) enthalten die erfindungsgemäßen Formmassen 1 bis 35 Gew.-%, faser- oder teilchenförmige Füllstoffe oder deren Mischungen. Als Beispiele für Füllstoffe seien Asbest, Kohlenstoff- oder Glasfasern in Form von Glasgeweben, Glasmatten oder Glasseidenrovings, Glaskugeln sowie Wollastonit genannt.

Bevorzugte faserförmige Verstärkungsstoffe (Komponente D) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Überraschenderweise, so wie es gewünscht wird, weisen - auch bei hohen Anteilen von teilchenförmigen Füllstoffen - die erfindungsgemäßen Formmassen die Klassifikation V-O nach UL 94 auf.

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Als weitere Komponente E) kann in den erfindungsgemäßen thermoplastischen Formmassen ein schlagzäh modifizierender Kautschuk (Elastomer) in Mengen von bis zu 20 Gew.-%, vorzugsweise von 1 bis 10 Gew.-% enthalten sein.

Nur beispielsweise seien als schlagzäh modifizierende Kautschuke Elastomere auf Ethylen-, Propylen-, Butadien- oder Acrylatbasis oder Mischungen dieser Monomeren genannt.

Derartige Polymere werden z.B. in Houben-Weyl, Methoden der organischen Chemie, Bd. 14/1 (Georg-Thieme-Verlag, Stuttgart, 1061), Seite 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EP) bzw. Ethylen-Propylen-Dien-(EPDM)-Kautschuke zu nennen, die vorzugsweise ein Verhältnis von Ethylenresten zu Propylenresten im Bereich von 40:60 bis 65:35 aufweisen.

Die Mooney-Viskositäten (ML+4/100°C) solcher unvernetzter EP bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EP-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie 1,4-Hexadien, 1,5-Hexadien, 2,5-Dimethyl-1,5-hexadien und 1,4-Octadien, cyclische Diene wie Cyclopentadien, Cyclohexadien, Cyclooctadien und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexadien-1,5, 5-Ethyliden-Norbornen und Dicyclopentadien. Der Diengehalt der EPDM-Kautschuke beträgt vorzugsweise 0,5 bis 10, insbesondere 1 bis 8 Gew.-%, bezogen auf das Gesamtgewicht des Kautschuks.

EP- bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe bevorzugter Kautschuke sind Copolymere des Ethylens mit Acrylsäure- und/oder Methacrylsäureestern, insbesondere solche die zusätzlich noch Epoxy-Gruppen enthalten. Diese Epoxygruppen werden vorzugsweise durch Zugabe von Epoxygruppen enthaltenden Monomeren der allgemeinen Formeln V oder VI zum Monomerengemisch in den Kautschuk eingebaut 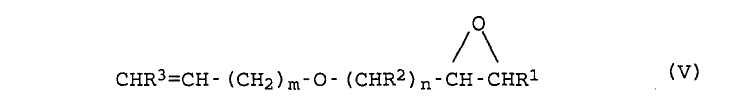 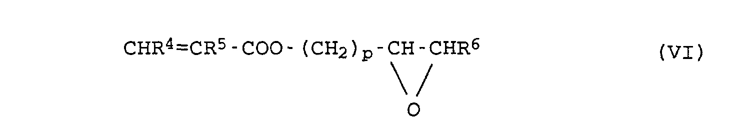 wobei R¹, R², R³, R⁴ und R⁵ und R⁶ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Bevorzugt sind R¹, R² und R³ Wasserstoff, m hat den Wert 0 oder 1 und n ist 1. Die entsprechenden Verbindungen sind Alkylglycidylether oder Vinylglycidylether.

Bevorzugte Beispiele für Verbindungen der Formel (VI) sind epoxygruppenenthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.-%, der Anteil an Epoxygruppen enthaltenden Monomeren und der Anteil des Acrylsäure- und/oder Methacrylsäureesters jeweils im Bereich von 1 bis 49 Gew.-%.

Besonders bevorzugt sind Copolymerisate aus
- 50 bis 98,9: insbesondere 60 bis 95 Gew.-% Ethylen,
- 0,1 bis 40,: insbesondere 2 bis 20 Gew.-% Glycidylacrylat, Glycidylmethacrylat, Acrylsäure und/oder Maleinsäureanhydrid,
- 1 bis 45: insbesondere 10 bis 35 Gew.-% n Butylacrylat und/oder 2-Ethylenhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische - Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte Elastomere (Kautschuke) E sind weiterhin Pfropfcopolymerisate mit Butadien, Butadien/Styrol-, Butadien/Acrylnitril und Acrylestern, wie sie z. B. in den DE-A-16 94 173 und DE-A 23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk E) können auch Pfropfpolymerisate aus
- 25 bis 98 Gew.-%: eines Acrylatkautschuks mit einer Glasübergangstemperatur von unter -20°C als Pfropfgrundlage
- und 2 bis 75 Gew.-%: eines copolymerisierbaren ethylenisch ungesättigten Monomeren, dessen Homo- bzw. Copolymerisate eine Übergangstemperatur von mehr als 25°C aufweisen, als Pfropfauflage
eingesetzt werden.

Die Pfropfgrundlage sind Acrylat bzw. Methacrylatkautschuke, wobei bis zu 40 Gew.-% weiterer Comonomerer enthalten sein können. Die C₁-C₈-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-C₁-C₆-Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.-%, insbesondere 0,05 bis 2 Gew.-% eines vernetzenden Monomeren mit mehr als einer Doppelbindung erzielt. Geeignete vernetzende Monomere werden z. B. in der DE-A- 27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft, ihre Menge auf nicht mehr als 1 Gew.-%, bezogen auf die Pfropfgrundlage, zu beschränken.

Besonders bevorzugte Pfropfgrundlagen sind Emulsionspolymerisate mit einem Gelgehalt von mehr als 60 Gew.-% (bestimmt in Dimethylformamid bei 25°C nach H. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Ouotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke E) weisen vorzugsweise eine Glasübergangstemperatur von unter -30°C, insbesondere von unter -40°C auf, was zu einer guten Schlagzähigkeit auch bei tiefen Temperaturen führt.

Es versteht sich, daß auch Mischungen der vorstehend aufgeführten schlagzäh modifizierenden Elastomeren eingesetzt werden können.

Neben den Komponenten A) bis E) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten A) bis E).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, Nukleierungsmittel und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis zu 1 Gew.-%, bezogen auf das Gewicht der Formmasse, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.-% eingesetzt werden.

Gleit- und Entformungsmittel, die in der Regel in Mengen bis zu 1 Gew.-% der thermoplastischen Masse zugesetzt werden, sind Stearinsäure, Stearate, Stearylalkohol, Stearinsäurealkylester und -amide sowie Ester des Pentaerythrits mit langkettigen Fettsäuren.

Unter den Zusatzstoffen sind auch Stabilisatoren, die die Dehydrobromierung der Komponente B) verhindern, so daß die Verarbeitungsstabilität erhöht und die Korrosionswirkung herabgesenkt wird. Derartige Stabilisatoren sind z.B. Salze von mono- oder bifunktionellen Fettsäuren wie Calciumbehenat, Calciumstearat, Bariumstearat und Bleiphthalat, Calciumcarbonat, organische Zinnverbindungen wie cyclisches Dibutylzinnsulfid oder Butylthiostannonsäure und Hydrogenphosphate z.B. Na₂HPO₄.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 280 bis 350°C.

Es ist prinzipiell auch möglich und manchmal vorteilhaft, zunächst die niedermolekulare Komponente A) mit B) und C) sowie gegebenenfalls D) und E) abzumischen und anschließend in fester Phase nachzukondensieren.

Weiterhin kann es von Vorteil sein, den Synergisten in Form eines Konzentrats (Batch) aus Polyamid oder Polyethylen einzuarbeiten.

Besonders bevorzugte Zusammensetzungen der erfindungsgemäßen Formmassen enthalten:

| | | | | |
|---|---|---|---|---|
| A) | 35 - 97 Gew.-% | | A) | 35 - 87 Gew.-% |
| B) | 1 - 20 Gew.-% | oder | B) | 1 - 20 Gew.-% |
| C) | 1 - 10 Gew.-% | | C) | 1 - 10 Gew.-% |
| D) | 1 - 35 Gew.-% | | D) | 10 - 35 Gew.-% |
| | | | E) | 1 - 10 Gew.-% |

Die erfindungsgemäßen Formmassen zeichnen sich durch ein gutes Gesamtspektrum der mechanischen Eigenschaften aus. Die Formkörper weisen eine helle Eigenfarbe auf und sind in der Anwendung toxikologisch unbedenklich. Zusätzlich zur guten Flammbeständigkeit weisen sie gute elektrische Eigenschaften, insbesondere eine gute Kriechstromfestigkeit und Durchschlagsfestigkeit, auf. Durch die außergewöhnlich gute Beständigkeit gegenüber verschiedenen Löt-verfahren eignen sich die erfindungsgemäßen Formmassen insbesondere zur Herstellung von spritzgegossenen Leiterplatten, die auch integrierte Funktionselemente enthalten können und problemlos verkupfert werden können.

Außerdem eignen sich die erfindungsgemäßen Formmassen zur Herstellung von insbesondere kompakten Gehäusen und sonstigen Bauteilen für elektronische Geräte, wobei hohe Anforderungen an die Wärmeformbeständigkeit gestellt werden.

### Beispiele

Es wurden folgende Komponenten eingesetzt:

### Komponente A)

Die Herstellung erfolgte gemäß EP 129 195.

Eine wäßrige Lösung, bestehend aus 35 kg ε-Caprolactam, 55 kg Terephthalsäure, 38,5 kg Hexamethylendiamin und 128,5 kg Wasser wurde aus einem beheizten Vorratsbehälter bei ca. 80°C mit einer Geschwindigkeit entsprechend einer Polyamidmenge von 5 kg/Stunde mittels einer Dosierpumpe in einen teilweise horizontal, teilweise vertikal angeordneten Röhrenverdampfer befördert. Der Verdampfer war mit einem flüssigen Wärmeträger, der eine Temperatur von 295°C hatte, bei kräftiger Umwälzung beheizt. Der Verdampfer hatte eine Länge von 3 m und einen Inhalt von 180 ml und eine wärmeübertragende Oberfläche von etwa 1300 cm². Die Verweilzeit im Verdampfer beträgt 50 sec. Das aus dem Verdampfer austretende Gemisch aus Präpolymeren und Wasserdampf hatte eine Temperatur von 290°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,1 Gew.-%. Als Kolonnensumpf erhielt man eine wäßrige Lösung von Hexamethylendiamin, die 80 Gew.-% Hexamethylendiamin und 1 bis 3 % ε-Caprolactam, jeweils bezogen auf erzeugtes Polyamid enthielt. Diese Lösung wurde über eine Pumpe wieder vor dem Eintritt in den Verdampfer der Ausgangssalzlösung zugegeben.

Nach dem Verdampfer hatte das Präpolymere eine relative Viskosität von 1,25, gemessen in 96 gew.-%iger Schwefelsäure bei 25°C und wies nach der Endgruppenanalyse einen Umsatz von 93 bis 95 % auf. Der Gehalt an Bis-hexamethylentriamin betrug 0,1 bis 0,15 Gew.-%, bezogen auf Polyamid.

Nach Austritt der Polymerschmelze aus dem Abscheider hatte das Polyamid eine sehr helle Eigenfarbe und einen äußerst niedrigen Gehalt an Bis-hexamethylentriamin von 0,17 % sowie eine relative Viskosität von 1,65 bis 1,80.

Das Produkt wies in etwa eine Äquivalenz von Carboxyl- und Aminoendgruppen auf.

Der Gehalt an extrahierbaren Anteilen (Extraktion mit Methanol) betrug 3,1 bis 3,3 Gew.-%.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasekondensation mit überhitztem Wasserdampf bei 195°C und einer Verweilzeit von 30 Stunden auf eine Endviskosität von η-rel = 2,50 kondensiert. Der Gehalt an extrahierbaren Anteilen betrug dann 0,2 Gew.-% (Methanolextrakt).

### Komponente B)

Bromiertes Polystyrol mit einem Bromgehalt (Anteil an kernsubstituiertem Brom) von 67 % (Pyro-check® 68 PB der Firma Ferro Corporation)

### Komponente C)

Antimontrioxid mit einer Dichte von 5,2 bis 5,8 g/cm³

### Komponente D1)

Glasfasern mit einem mittleren Durchmesser von 10 µm.

### Komponente D2)

Wollastonit der mittleren Teilchengröße (d₅₀) von 10 µm und einer spezifischen Oberfläche von 5 m²/g.

### Komponente E)

ein Olefincopolymerisat aus

| | |
|---|---|
| 59,8 | Gew.-% Ethylen |
| 35 | Gew.-% n-Butylacrylat |
| 4,5 | Gew.-% Acrylsäure und |
| 0,7 | Gew.-% Maleinsäureanhydrid |

mit einem Schmelzindex MFI von 10 g/10 min bei 190°C und 2,16 kg Belastung.

Dieses Copolymerisat wurde durch Copolymerisation der Monomeren bei erhöhter Temperatur und erhöhtem Druck hergestellt.

Die Komponenten wurden auf einem Zweischneckenextruder bei 300 - 350°C abgemischt und in ein Wasserbad extrudiert. Komponente E) wurde dabei erst in der Schmelze zugegeben. Nach Granulierung und Trocknung wurden auf einer Spritzgußmaschine Prüfkörper gespritzt und geprüft.

Der Brandtest erfolgte nach UL 94 an 1/8, 1/16 und 1/32 Zoll-Prüfkörpern mit üblicher Konditionierung. Der LOI (lowest osygen-Index) wurde nach ASTM D 2863-77 bestimmt.

Die Kriechstromfestigkeit wurde nach IEC 112/1979 bestimmt, der Elastizitätsmodul nach DIN 53 457 und die Schlagzähigkeit nach DIN 53 453.

Die Zusammensetzung der Formmassen und die Ergebnisse der Messungen sind der Tabelle zu entnehmen.

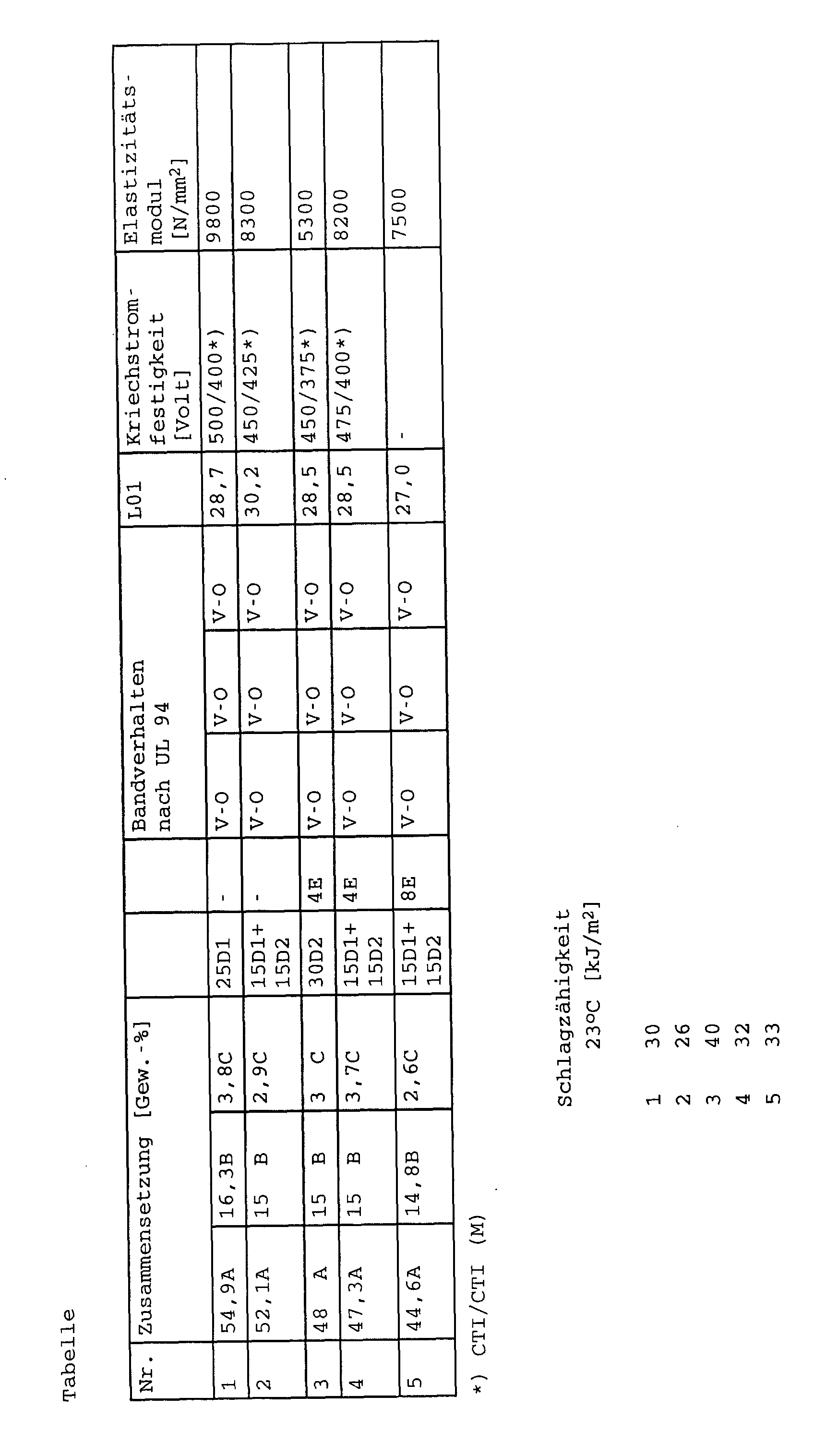

## Patentansprüche (Patentansprüche für folgende(n) Vertragsstaat(en): DE, GB)

1. Flammgeschützte, thermoplastische Formmassen, bestehend aus
A) 35 bis 97 Gew.-% eines teilaromatischen Copolyamids mit einem Triamingehalt von weniger als 0,5 Gew.-% aufgebaut im wesentlichen aus
a₁) 40 bis 90 Gew.-% Einheiten, die sich von Terephthalsäure und Hexamethylendiamin ableiten,
a₂) 0 bis 50 Gew.-% Einheiten, die sich von ε-Caprolactam ableiten und
a₃) 0 bis 60 Gew.-% Einheiten, die sich von Adipinsäure und Hexamethylendiamin ableiten,
wobei die Komponente a₂) und/oder a₃) insgesamt mindestens 10 Gew.-% der Gesamteinheiten ausmachen,
B) 1 bis 20 Gew.-% eines bromierten Polystyrols oder eines bromierten Styrol-Oligomeren oder deren Mischungen,
C) 1 bis 10 Gew.-% eines synergistischen Metalloxides oder Metallborates oder deren Mischungen sowie darüber hinaus
D) 1 bis 35 Gew.-% eines faser- oder teilchenförmigen Füllstoffes oder deren Mischungen und
E) 0 bis 20 Gew.-% eines kautschukelastischen Polymerisates und gegebenenfalls bis zu 20 Gew.-%, bezogen auf das Gesamtgewicht der Komponenten A) bis E), üblicher Zusatzstoffe und Verarbeitungshilfsmittel, mit der Maßgabe, daß die Formmassen kein Anhydridgruppen aufweisendes bromiertes Polystyrol enthalten.

2. Flammgeschützte thermoplastische Formmassen nach Anspruch 1, enthaltend
A) 35 bis 87 Gew.-%
B) 1 bis 20 Gew.-%
C) 1 bis 10 Gew.-%
D) 10 bis 35 Gew.-%
E) 1 bis 10 Gew.-%.

3. Flammgeschützte thermoplastische Formmassen nach mindestens einem der Ansprüche 1 oder 2, in denen die Komponente A) aus
a₁) 50 bis 80 Gew.-% Einheiten, die sich von Terephthalsäure und Hexamethylendiamin ableiten und
a₂) 20 bis 50 Gew.-% Einheiten, die sich von ε-Caprolactam ableiten
aufgebaut ist.

4. Flammgeschützte thermoplastische Formmassen nach mindestens einem der Ansprüche 1 bis 3, in denen das bromierte Polystyrol (Komponente B) einen Bromgehalt von mindestens 55 Gew.-% aufweist.

5. Flammgeschützte thermoplastische Formmassen nach mindestens einem der Ansprüche 1 bis 3, in denen das bromierte Oligomere (Komponente B) einen Bromgehalt von mindestens 40 Gew.-% aufweist.

6. Flammgeschützte thermoplastische Formmassen nach mindestens einem der Ansprüche 1 bis 5, in denen die Komponente C) aus Antimontrioxid oder Zinkoxid oder Bleioxid oder Eisenoxid oder Zinkborat oder deren Mischungen aufgebaut ist.

7. Verwendung der thermoplastischen Formmassen gemäß den Ansprüchen 1 bis 6 zur Herstellung von Folien, Fasern und Formkörpern.

8. Formkörper, erhältlich aus den thermoplastischen Formmassen gemäß den Ansprüchen 1 bis 6.

## Patentansprüche (Patentansprüche für folgende(n) Vertragsstaat(en): FR, IT, NL, CH, BE, ES, LI)

1. Flammgeschützte, thermoplastische Formmassen, bestehend aus
A) 35 bis 97 Gew.-% eines teilaromatischen Copolyamids mit einem Triamingehalt von weniger als 0,5 Gew.-% aufgebaut im wesentlichen aus
a₁) 40 bis 90 Gew.-% Einheiten, die sich von Terephthalsäure und Hexamethylendiamin ableiten,
a₂) 0 bis 50 Gew.-% Einheiten, die sich von ε-Caprolactam ableiten und
a₃) 0 bis 60 Gew.-% Einheiten, die sich von Adipinsäure und Hexamethylendiamin ableiten,
wobei die Komponente a₂) und/oder a₃) insgesamt mindestens 10 Gew.-% der Gesamteinheiten ausmachen,
B) 1 bis 20 Gew.-% eines bromierten Polystyrols oder eines bromierten Styrol-Oligomeren oder deren Mischungen,
C) 1 bis 10 Gew.-% eines synergistischen Metalloxides oder Metallborates oder deren Mischungen sowie darüber hinaus
D) 1 bis 35 Gew.-% eines faser- oder teilchenförmigen Füllstoffes oder deren Mischungen und
E) 0 bis 20 Gew.-% eines kautschukelastischen Polymerisates und gegebenenfalls bis zu 20 Gew.-%, bezogen auf das Gesamtgewicht der Komponenten A) bis E), üblicher Zusatzstoffe und Verarbeitungshilfsmittel.

2. Flammgeschützte thermoplastische Formmassen nach Anspruch 1, enthaltend
A) 35 bis 87 Gew.-%
B) 1 bis 20 Gew.-%
C) 1 bis 10 Gew.-%
D) 10 bis 35 Gew.-%
E) 1 bis 10 Gew.-%.

3. Flammgeschützte thermoplastische Formmassen nach mindestens einem der Ansprüche 1 oder 2, in denen die Komponente A) aus
a₁) 50 bis 80 Gew.-% Einheiten, die sich von Terephthalsäure und Hexamethylendiamin ableiten und
a₂) 20 bis 50 Gew.-% Einheiten, die sich von ε-Caprolactam ableiten
aufgebaut ist.

4. Flammgeschützte thermoplastische Formmassen nach mindestens einem der Ansprüche 1 bis 3, in denen das bromierte Polystyrol (Komponente B) einen Bromgehalt von mindestens 55 Gew.-% aufweist.

5. Flammgeschützte thermoplastische Formmassen nach mindestens einem der Ansprüche 1 bis 3, in denen das bromierte Oligomere (Komponente B) einen Bromgehalt von mindestens 40 Gew.-% aufweist.

6. Flammgeschützte thermoplastische Formmassen nach mindestens einem der Ansprüche 1 bis 5, in denen die Komponente C) aus Antimontrioxid oder Zinkoxid oder Bleioxid oder Eisenoxid oder Zinkborat oder deren Mischungen aufgebaut ist.

7. Verwendung der thermoplastischen Formmassen gemäß den Ansprüchen 1 bis 6 zur Herstellung von Folien, Fasern und Formkörpern.

8. Formkörper, erhältlich aus den thermoplastischen Formmassen gemäß den Ansprüchen 1 bis 6.

## Claims (Claims for the following Contracting State(s): DE, GB)

1. A flameproofed, thermoplastic molding material comprising
A) from 35 to 97% by weight of a partly aromatic copolyamide having a triamine content of less than 0.5% by weight, essentially composed of
a₁) from 40 to 90% by weight of units derived from terephthalic acid and hexamethylenediamine,
a₂) from 0 to 50% by weight of units derived from ε-caprolactam and
a₃) from 0 to 60% by weight of units derived from adipic acid and hexamethylenediamine,
components a₂) and/or a₃) accounting in total for not less than 10% by weight of the total number of units,
B) from 1 to 20% by weight of a brominated polystyrene or a brominated styrene oligomer or of a mixture thereof,
C) from 1 to 10% by weight of a synergistic metal oxide or metal borate or a mixture thereof and in addition
D) from 1 to 35% by weight of a fibrous or particulate filler or a mixture thereof and
E) from 0 to 20% by weight of an elastomeric polymer and, if required, not more than 20% by weight, based on the total weight of components A) to E), of conventional additives and processing assistants, with the proviso that the molding material does not contain brominated polystyrene in which there are anhydride groups.

2. A flameproofed thermoplastic molding material as claimed in claim 1, containing
from 35 to 87% by weight of A),
from 1 to 20% by weight of B),
from 1 to 10% by weight of C),
from 10 to 35% by weight of D) and
from 1 to 10% by weight of E).

3. A flameproofed thermoplastic molding material as claimed in at least one of claims 1 and 2, wherein the component A) is composed of
a₁) from 50 to 80% by weight of units derived from terephthalic acid and hexamethylenediamine and
a₂) from 20 to 50% by weight of units derived from ε-caprolactam.

4. A flameproofed thermoplastic molding material as claimed in at least one of claims 1 to 3, wherein the brominated polystyrene (component B) has a bromine content of not less than 55% by weight.

5. A flameproofed thermoplastic molding material as claimed in at least one of claims 1 to 3, wherein the brominated oligomer (component B) has a bromine content of not less than 40% by weight.

6. A flameproofed thermoplastic molding material as claimed in at least one of claims 1 to 5, wherein the component C) consists of antimony trioxide or zinc oxide or lead oxide or iron oxide or zinc borate or a mixture thereof.

7. Use of a thermoplastic molding material as claimed in any of claims 1 to 6 for the production of films, fibers and moldings.

8. A molding obtainable from thermoplastic molding material as claimed in any of claims 1 to 6.

## Claims (Claims for the following Contracting State(s): FR, IT, NL, CH, BE, ES, LI)

1. A flameproofed, thermoplastic molding material comprising
A) from 35 to 97% by weight of a partly aromatic copolyamide having a triamine content of less than 0.5% by weight, essentially composed of
a₁) from 40 to 90% by weight of units derived from terephthalic acid and hexamethylenediamine,
a₂) from 0 to 50% by weight of units derived from ε-caprolactam and
a₃) from 0 to 60% by weight of units derived from adipic acid and hexamethylenediamine,
components a₂) and/or a₃) accounting in total for not less than 10% by weight of the total number of units,
B) from 1 to 20% by weight of a brominated polystyrene or a brominated styrene oligomer or of a mixture thereof,
C) from 1 to 10% by weight of a synergistic metal oxide or metal borate or a mixture thereof and in addition
D) from 1 to 35% by weight of a fibrous or particulate filler or a mixture thereof and
E) from 0 to 20% by weight of an elastomeric polymer and, if required, not more than 20% by weight, based on the total weight of components A) to E), of conventional additives and processing assistants.

2. A flameproofed thermoplastic molding material as claimed in claim 1, containing
from 35 to 87% by weight of A),
from 1 to 20% by weight of B),
from 1 to 10% by weight of C),
from 10 to 35% by weight of D) and
from 1 to 10% by weight of E).

3. A flameproofed thermoplastic molding material as claimed in at least one of claims 1 and 2, wherein the component A) is composed of
a₁) from 50 to 80% by weight of units derived from terephthalic acid and hexamethylenediamine and
a₂) from 20 to 50% by weight of units derived from ε-caprolactam.

4. A flameproofed thermoplastic molding material as claimed in at least one of claims 1 to 3, wherein the brominated polystyrene (component B) has a bromine content of not less than 55% by weight.

5. A flameproofed thermoplastic molding material as claimed in at least one of claims 1 to 3, wherein the brominated oligomer (component B) has a bromine content of not less than 40% by weight.

6. A flameproofed thermoplastic molding material as claimed in at least one of claims 1 to 5, wherein the component C) consists of antimony trioxide or zinc oxide or lead oxide or iron oxide or zinc borate or a mixture thereof.

7. Use of a thermoplastic molding material as claimed in any of claims 1 to 6 for the production of films, fibers and moldings.

8. A molding obtainable from a thermoplastic molding material as claimed in any of claims 1 to 6.

## Revendications (Revendications pour l'(les) Etat(s) contractant(s) suivant(s): DE, GB)

1. Matières thermoplastiques ignifugées moulables comprenant:
A) 35% à 97% en poids d'un copolyamide partiellement aromatique, présentant une teneur en triamine de moins de 0,5% en poids, essentiellement composé de:
a₁) 40% à 90% en poids de motifs dérivés de l'acide téréphtalique et de l'hexaméthylènediamine,
a₂) 0% à 50% en poids de motifs dérivés de l'ε-caprolactame et
a₃) 0% à 60% de motifs dérivés de l'acide adipique et de l'hexaméthylènediamine,
les composants a₂) et/ou a₃) représentant au total au moins 10% en poids de la totalité des motifs,
B) 1% à 20% en poids d'un polystyrène bromé ou d'un oligomère de styrène bromé ou de leurs mélanges,
C) 1% à 10% en poids d'un oxyde de métal ou d'un borate de métal synergique ou de leurs mélanges ainsi que, en outre,
D) 1% à 35% en poids d'une charge sous forme de fibres ou de particules, ou de leurs mélanges,
E) 0% à 20% en poids d'un polymère caoutchouteux élastique et éventuellement jusqu'à 20% en poids, par rapport au poids total des composants A) à E), d'additifs et d'adjuvants classiques, avec la condition que les matières moulables ne contiennent aucun polystyrène bromé contenant des groupes anhydride.

2. Matières thermoplastiques ignifugées moulables selon la revendication 1, comprenant
A) à raison de 35% à 87% en poids,
B) à raison de 1% à 20% en poids,
C) à raison de 1% à 10% en poids,
D) à raison de 10% à 35% en poids,
E) à raison de 1% à 10% en poids.

3. Matières thermoplastiques ignifugées moulables selon l'une quelconque des revendications 1 ou 2, dans lesquelles le composant A) se compose de
a₁) 50% à 80% en poids de motifs dérivés de l'acide téréphtalique et de l'hexaméthylènediaminé,
a₂) 20% à 50% en poids de motifs dérivés de l'ε-caprolactame.

4. Matières thermoplastiques ignifugées moulables selon l'une quelconque des revendications 1 à 3, dans lesquelles le polystyrène bromé (composant B) présente une teneur en brome d'au moins 55% en poids.

5. Matières thermoplastiques ignifugées moulables selon l'une quelconque des revendications 1 à 3, dans lesquelles l'oligomère bromé (composant B) présente une teneur en brome d'au moins 40% en poids.

6. Matières thermoplastiques ignifugées moulables selon l'une quelconque des revendications 1 à 5, dans lesquelles le composant C) est composé de trioxyde d'antimoine, d'oxyde de zinc, d'oxyde de plomb, d'oxyde de fer ou de borate de zinc, ou de leurs mélanges.

7. Utilisation des matières thermoplastiques moulables selon les revendications 1 à 6 pour la fabrication de feuilles, de fibres et de corps moulés.

8. Corps moulés pouvant être obtenus à partir des matières thermoplastiques moulables selon les revendications 1 à 6.

## Revendications (Revendications pour l'(les) Etat(s) contractant(s) suivant(s): FR, IT, NL, CH, BE, ES, LI)

1. Matières thermoplastiques ignifugées moulables comprenant:
A) 35% à 97% en poids d'un copolyamide partiellement aromatique, présentant une teneur en triamine de moins de 0,5% en poids, essentiellement composé de:
a₁) 40% à 90% en poids de motifs dérivés de l'acide téréphtalique et de l'hexaméthylènediamine,
a₂) 0% à 50% en poids de motifs dérivés de l'ε-caprolactame et
a₃) 0% à 60% de motifs dérivés de l'acide adipique et de l'hexaméthylènediamine,
les composants a₂) et/ou a₃) représentant au total au moins 10% en poids de la totalité des motifs,
B) 1% à 20% en poids d'un polystyrène bromé ou d'un oligomère de styrène bromé ou de leurs mélanges,
C) 1% à 10% en poids d'un oxyde de métal ou d'un borate de métal synergique, ou de leurs mélanges ainsi que, en outre,
D) 1% à 35% en poids d'une charge sous forme de fibres ou de particules, ou de leurs mélanges,
E) 0% à 20% en poids d'un polymère caoutchouteux élastique et éventuellement jusqu'à 20% en poids, par rapport au poids total des composants A) à E), d'additifs et d'adjuvants classiques.

2. Matières thermoplastiques ignifugées moulables selon la revendication 1, comprenant
A) à raison de 35% à 87% en poids,
B) à raison de 1% à 20% en poids,
C) à raison de 1% à 10% en poids,
D) à raison de 10% à 35% en poids,
E) à raison de 1% à 10% en poids.

3. Matières thermoplastiques ignifugées moulables selon l'une quelconque des revendications 1 ou 2, dans lesquelles le composant A) se compose de
a₁) 50% à 80% en poids de motifs dérivés de l'acide téréphtalique et de l'hexaméthylènediamine,
a₂) 20% à 50% en poids de motifs dérivés de l'ε-caprolactame.

4. Matières thermoplastiques ignifugées moulables selon l'une quelconque des revendications 1 à 3, dans lesquelles le polystyrène bromé (composant B) présente une teneur en brome d'au moins 55% en poids.

5. Matières thermoplastiques ignifugées moulables selon l'une quelconque des revendications 1 à 3, dans lesquelles l'oligomère bromé (composant B) présente une teneur en brome d'au moins 40% en poids.

6. Matières thermoplastiques ignifugées moulables selon l'une quelconque des revendications 1 à 5, dans lesquelles le composant C) est composé de trioxyde d'antimoine, d'oxyde de zinc, d'oxyde de plomb, d'oxyde de fer ou de borate de zinc, ou de leurs mélanges.

7. Utilisation des matières thermoplastiques moulables selon les revendications 1 à 6 pour la fabrication de feuilles, de fibres et de corps moulés.

8. Corps moulés pouvant être obtenus à partir des matières thermoplastiques moulables selon les revendications 1 à 6.
